# EUROPEAN PATENT APPLICATION

(11) **EP 2 180 635 A1**
(43) Date of publication of application: **28.04.2010**
(21) Application number: 08784040.1
(22) Date of filing: 19.08.2008
(51) Int. Cl.: H04L 12/14

(54) **METHOD, SYSTEM AND DEVICE FOR OPENING THE CHARGING ACCOUNTING DATA CAPABILITY**

(30) Priority: 23.08.2007 CN 200710146148
(71) Applicant: Huawei Technologies Co., Ltd., Longgang District, Shenzhen Guangdong 518129 (CN)
(72) Inventor: SHI, Xin, Shenzhen Guangdong 518129 (CN); SHAN, Mingjun, Shenzhen Guangdong 518129 (CN); LI, Chun, Shenzhen Guangdong 518129 (CN); KANG, Jiao, Shenzhen Guangdong 518129 (CN); GUO, Zhongjie, Shenzhen Guangdong 518129 (CN)
(74) Representative: Charles, Glyndwr
(86) International application number: PCT/CN2008/072049
(87) International publication number: WO 2009/026827

(57) **Abstract**

A method for opening accounting data capabilities includes: by a unified accounting data management system, receiving a Balance Control Request (BCR) from a charging system, where the BCR carries a request type; performing an accounting data management operation corresponding to the request type; and returning a Balance Control Answer (BCA) to the charging system, where the BCA carries a result of the accounting data management operation. A system for opening accounting data capabilities is also provided. According to the present invention, the accounting data of the user is sharable between the charging systems, and a specific implementation mode for interactions in the accounting data management is provided.

## Description

### Field of the Invention

The present invention relates to the charging field, and in particular, to a method, system, and apparatus for opening accounting data capabilities.

### Background of the Invention

With the evolution of the network and the intensification of competition in the telecom market, the telecom charging system is challenged. A charging system is required to be not only capable of simple charging for a single system and a single service, but also capable of full-service convergent charging and mutual conversion of charging modes supported by different charging systems.

In the current telecom charging system, the charging platforms are distributed, and a stand-alone system needs to be constructed for a specific service, and this system provides all the functions such as charging, accounting, and business operation. As an important step of the charging operation, the accounting data management refers to a series of operations, for example, deducting an expense from the account of a user who uses a service, and reserving a quota in the charging system.

Taking a prepaid charging system as an example, a user needs to prepay for the services to be consumed in the future, and each user has an account in the charging system, while the balance is stored in a counter. When the user needs to use a service, the prepaid system obtains the user account balance stored on the counter first and the tariff corresponding to the user and the service. A part of the prepayment in the user account balance is frozen as a reserved quota. The reserved quota is consumed with the progress of the service. After the service begins, the prepaid system obtains the information about consumption of the reserved quota in real time. When the reserved quota is about to run out, the foregoing process is repeated to reserve a new quota. If the user account balance is not enough for reserving the new quota, the service is terminated. If the service is terminated before the quota runs out, the consumed quota will be deducted, and the unused quota will be released.

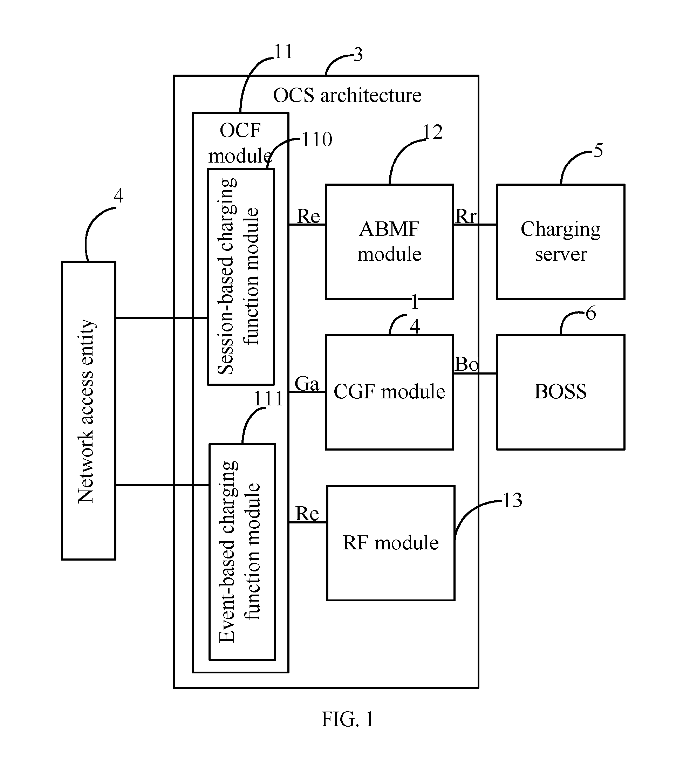

The prepaid system is implemented through an Online Charging System (OCS) architecture provided by the 3^{rd} Generation Partnership Project (3GPP). FIG. 1 shows an OCS architecture. This OCS architecture 3 includes an Online Charging Function (OCF) module 11, an Account Balance Management Function (ABMF) module 12, a Rating Function (RF) module 13, and a Charging Gateway Function (CGF) module 14.

The OCF module 11 is connected to various network access entities 4 through an external interface. Such network access entities 4 are also known as charging trigger network elements. The OCF module 11 further includes a session-based charging function module 110 and an event-based charging function module 111, which perform session-based or event-based interactions with the charging trigger network elements. The charging trigger network elements may be a Mobile Switching Center (MSC) or a Gateway GPRS Support Node (GGSN).

The ABMF module 12 stores the user account information and the counter information, and has no external interface connected to other charging systems. This module is connected to the OCF module 11 through an internal Re interface, and interacts with the OCF module 11. It performs accounting data management operations for the stored account information and counter information, and is connected to the charging server 5 through an Rr interface.

The RF module 13 is connected to the OCF module 11 through an internal Re interface, and provides the OCF module 11 with the tariff information required for managing accounting data.

The CGF module 14 is connected to the OCF module 11 through an internal Ga interface, and is connected to the Business and Operation Support System (BOSS) 6 through a Bo interface.

Although the functions of the modules in an OCS are specified, no specific implementation mode is put forward for interactions in the accounting data management, for example, interactions between the OCF module 11 and the ABMF 12.

Taking a postpaid charging system as an example, a user may use a service before paying, and a Call Detail Record (CDR) is generated at the end of the service, and then the expense is deducted from the user account according to the CDR. Similar to a prepaid charging system, the postpaid charging system also includes an ABMF module 12 for storing user account data. This ABMF module 12 has no external interface connected to other charging systems, and interacts with the charging function module in the postpaid charging system through an internal interface to manage accounting data.

In the process of implementing the present invention, the inventor finds at least the following defects in the prior art: In different charging systems, the ABMF module 12 for storing accounting data has no external interface with other charging systems, and the account information and the counter information are not available to other charging systems. That is, the accounting data capabilities are not open. Consequently, each charging system can manage only the accounting data stored in the charging system itself; convergent charging among the charging systems is not supported, and the charging modes supported by different charging systems are not mutually convertible. Moreover, no specific implementation mode for interactions in the accounting data management is put forward.

### Summary of the Invention

A method for opening accounting data capabilities is provided in an embodiment of the present invention to share accounting data between charging systems and to provide a specific implementation mode for interactions in the accounting data management.

A system for opening accounting data capabilities is provided in an embodiment of the present invention to share accounting data between charging systems and to provide a specific implementation mode for interactions in the accounting data management.

A method for opening accounting data capabilities includes:
by a unified accounting data management system, receiving a Balance Control Request (BCR) from a charging system, where the BCR carries a request type;
performing an accounting data management operation corresponding to the request type; and
returning a Balance Control Answer (BCA) to the charging system, where the BCA carries a result of the accounting data management operation.

A system for opening accounting data capabilities includes:
an accounting data management module, adapted to: store accounting data; invoke an interface module to receive a BCR sent by a charging system and carrying a request type, and perform an accounting data management operation corresponding to the request type for the accounting data; and invoke the interface module to send a BCA carrying an accounting data processing result to the charging system; and
an interface module, available to be invoked by the accounting data management module.

An accounting data management apparatus includes:
a storing module, adapted to store accounting data; and
a resolution executing module, adapted to: invoke an interface module to receive a BCR sent by a charging system and carrying a request type, resolve the request type, and perform an accounting data management operation corresponding to the request type; and invoke the interface module to send a BCA carrying an accounting data processing result to the charging system.

Compared with the prior art, the method and system for opening the accounting data capabilities in the embodiments of the present invention enable the unified accounting data management system to be independent of the charging system and to interact with the charging system through a BCR and a BCA. Therefore, the accounting data is sharable between different charging platforms. Moreover, a specific implementation mode for interactions in the accounting data management is provided.

### Brief Description of the Drawings

FIG. 1 shows an OCS architecture provided by the 3GPP in the prior art;
FIG. 2 is a flowchart of a method for opening accounting data capabilities in an embodiment of the present invention;
FIG. 3 shows an architecture composed of a unified accounting data management system, a prepaid system, and a postpaid system in an embodiment of the present invention;
FIG. 4 is a flowchart of a first instance of the flow shown in FIG. 2;
FIG. 5 is a flowchart of a second instance of the flow shown in FIG. 2;
FIG. 6 is a flowchart of a third instance of the flow shown in FIG. 2;
FIG. 7 is a flowchart of a fourth instance of the flow shown in FIG. 2;
FIG. 8 is a flowchart of the operations further included in the method for opening accounting data capabilities in an embodiment of the present invention;
FIG. 9 is a flowchart of an instance of the flow shown in FIG. 8;
FIG. 10 is a flowchart of a method for opening accounting data capabilities in a postpaid system scenario in an embodiment of the present invention; and
FIG. 11 shows a structure of a system for opening accounting data capabilities in an embodiment of the present invention.

### Detailed Description of the Invention

To make the objectives and merits of the present invention clearer, the following describes the present invention in detail with reference to accompanying drawings and preferred embodiments.

Before the preferred embodiments of the method for opening accounting data capabilities are described, the functions of the interfaces between the unified accounting data management system and the charging system are introduced below, as shown in Table 1. The function of the interfaces numbered 1-8 is to request the unified accounting data management system to perform accounting data management operations, and the function of the interface numbered 9 is to deliver a balance notification to the charging system actively.

**Table 1**

| Serial number | Interface Function | Function Description |
|---|---|---|
| 1 | Reading accounting data | Requesting the unified accounting data management system to read the accounting data |
| 2 | Initial reservation | Requesting the unified accounting data management system to reserve a specified quota at the beginning of a session |
| 3 | Intermediate update | Requesting the unified accounting data management system to reserve a specified quota in the session and update the balance |
| 4 | Terminating use | Requesting the unified accounting data management system to deduct the quota which is consumed from the previous reservation to the termination of the current session |
| 5 | Deducting an expense | Requesting the unified accounting data management system to deduct the specified quota |
| 6 | Refunding | Requesting the unified accounting data management system to refund the deducted quota |
| 7 | Checking the balance | Requesting the unified accounting data management system to check whether the account balance meets the specified quota requirement |
| 8 | Recharging an account and modifying various counters | Requesting the unified accounting data management system to recharge the account and modify various counters |
| 9 | Notifying the balance | Notifying the charging system that the account balance reaches the preset threshold |

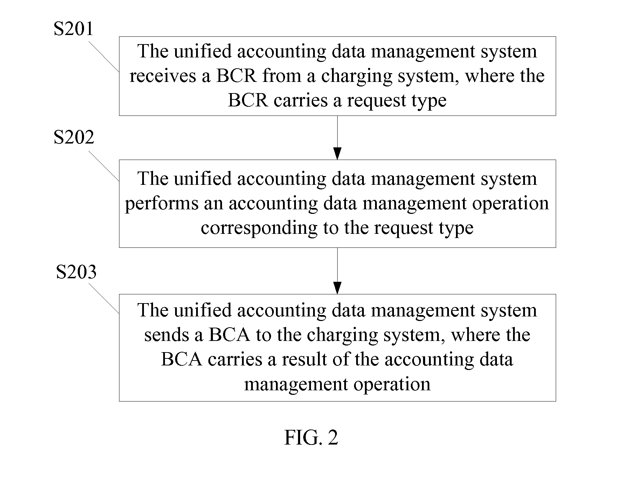

FIG. 2 is a flowchart of a method for opening accounting data capabilities in an embodiment of the present invention. The flow includes the following steps:
Step S201: The unified accounting data management system receives a BCR carrying a request type from the charging system. This BCR is triggered according to the message type after the charging system receives a Credit Control Request (CCR) sent by a Charging Trigger Function (CTF) network element and carrying the message type.

In this step, the unified accounting data management system is independent of the charging system, and is adapted to store accounting data such as account information and counter information, and to perform accounting data management operations according to the request of the charging system.

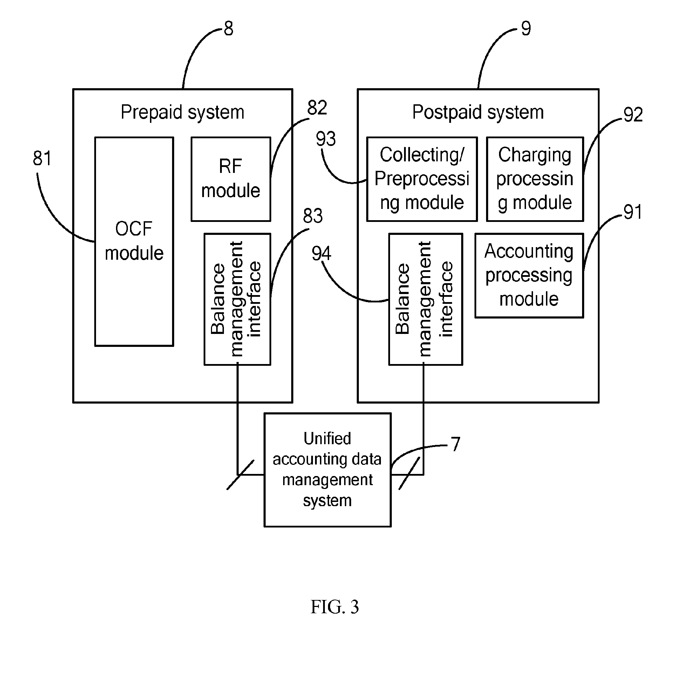

FIG. 3 shows an architecture composed of a unified accounting data management system 7, a prepaid system 8, and a postpaid system 9 in an embodiment of the present invention. In this architecture, the prepaid system 8 includes: an OCF module 81, an RF module 82, and a balance management interface 83 for interacting with the unified accounting data management system 7. The postpaid system 9 includes an accounting processing module 91, a charging processing module 92, a collecting/preprocessing module 93, and a balance management interface 94 for interacting with the unified accounting data management system 7. How the modules in the prepaid system 8 and the postpaid system 9 interact to perform the functions such as rating is not a major concern herein. The method is well known to those skilled in the art, and is not described further. The major concern of the present invention is: setting a unified accounting data management system 7 independent of the charging system so that the accounting data is sharable between different charging platforms.

Given below is an exemplary format of a BCR in this step:

```
      <BCR> ::= < Header: XXX,REQ, PXY >
                   { Request-Type}
                   { Subscription-Id }
               { Service-Accounting }
```

"Request-Type" indicates the type of the BCR, and its value may be the serial numbers of the interface functions numbered 1-8 in Table 1, for example, 5, which indicates that the type of the BCR is expense deduction; "Subscription-Id" is a subscription identifier which identifies a subscriber uniquely, and, through this parameter, the corresponding account may be searched out in the unified accounting data management system; "Service-Accounting" is used for interactions between the charging system and the unified accounting data management system and for encapsulating the data related to the unified accounting data management. Table 2 describes the parameters.

**Table 2**

| Parameter | Description | Note |
|---|---|---|
| **Request-Type** | This parameter indicates the type of the BCR. The values of this parameter and the corresponding meanings are as follows: 1: Reading the account information 2: Initial reservation 3: Intermediate update 4: Terminating use 5: Deducting an expense 6: Refunding 7: Checking the balance 8: Recharging the account and modifying various counters | Mandatory |
| **Subscription-Id** | This parameter is a subscription identifier which identifies a subscriber uniquely. | Mandatory |
| **Service-Accounting** | This parameter is used for interactions between the charging system and the unified accounting data management system and for encapsulating the data related to the accounting data management. | Mandatory |

Among the parameters in the BCR, "Service-Accounting" needs to carry different optional parameters at the time of data encapsulation. The format of "Service-Accounting" is shown below:

```
      Service-Accounting :: < Header: TBD>
                                 [ Service-Id ]
                                *[ Counter ]
                                *[ Counter-Price ]
                                *[ Counter-Tariff ]
                                *[ Requested-Units ]
                                *[ Consumed-Units ]
                                *[ Monetary-Quota ]
                            [ Check-Balance-Result]
```

Table 3 describes the parameters in the foregoing "Service-Accounting".

**Table 3**

| Service-Id | This parameter identifies a service in use. | Optional |
|---|---|---|
| Counter | This parameter indicates various counters for storing data such as the accumulated quantity of short messages sent every month, quantity of free call minutes presented every month, and account balance data. | Optional |
| Counter-Id | This parameter identifies a counter uniquely. | Optional |
| Counter-Price | This parameter is used for modifying the value of the counter identified by "Counter-Id". | Optional |
| Requested-Units | This parameter defines the quota to be granted by the charging system. | Optional |
| Consumed-Units | This parameter defines the quota already consumed. | Optional |
| Monetary-Quota | This parameter indicates a quota expressed in money. | Optional |
| Check-Balance-Result | This parameter indicates the balance check result. Below are enumerated values: | |
| | 0: The current balance fulfills the quota required for this service 1: The current balance fulfills the quota required for this service | Optional |

In this step, the message types carried in the CCR sent by the charging trigger network element include two types, depending on the session-based accounting data management mode and the event-based accounting data management mode. The session-based accounting data management mode means that the service session of the user triggers a network element that has the charging trigger function, and this network element sends a CCR carrying a message type to the OCF module. In this case, the message type may be: Initial, Interim, or Termination. The event-based accounting data management mode means that the charging event triggers a network element that has the charging trigger function, and this network element sends a CCR carrying a message type to the OCF module. In this case, the message type may be: Deduct, Refund, or Check Balance.

Step S202: The unified accounting data management system performs the accounting data management operation corresponding to the request type.

In this step, the unified accounting data management system performs the accounting data management operation corresponding to the request type. For example, if "Request-Type" is 5, which indicates that the accounting data management type of the BCR is expense deduction, the unified accounting data management system performs the operation of deducting an expense.

Step S203: The unified accounting data management system uses a BCA to return an accounting data management operation result to the charging system.

In this step, a BCA carrying an accounting data management operation result is returned to the charging system. Given below is an exemplary format of the message:

```
      <BCA> ::= < Header: XXX,PXY >
                   { Result-Code }
               { Service-Accounting }
```

In the foregoing message format, "Result-Code" indicates whether the unified accounting data management operation is allowed or forbidden, for example, the value "0" indicates that the operation is allowed; "Service-Accounting" is used for interactions between the charging system and the unified accounting data management system and for encapsulating the data related to the unified accounting data management. Table 4 describes the foregoing parameters, where the parameters that may be included in "Service-Accounting" are the same as those shown in Table 3.

**Table 4**

| Parameter | Description | Note |
|---|---|---|
| **Result-Code** | Enumerated values: 0: The request is accepted 1: The request is rejected | Mandatory |
| **Service-Accounting** | This parameter is used for interactions between the charging system and the unified accounting data management system and for encapsulating the data related to the accounting data management. | Mandatory |

Through steps S201-S203, the process of the unified accounting data management method in the first preferred embodiment of the present invention is completed.

The method for opening the accounting data capabilities in the embodiment of the present invention enables the unified accounting data management system to be independent of the charging system and to interact with the charging system through a BCR and a BCA. Therefore, the accounting data is sharable between different charging platforms, and a specific implementation mode for interactions in the accounting data management is provided.

Several instances of the process shown in FIG. 2 are given below with respect to different unified accounting data management types in specific scenarios. It is assumed that the scenario is: The charging system is a prepaid system in an OCS architecture; the OCF module of the prepaid system interacts with the unified accounting data management system to manage the accounting data; and the OCF module of the prepaid system interacts with the RF module to perform rating.

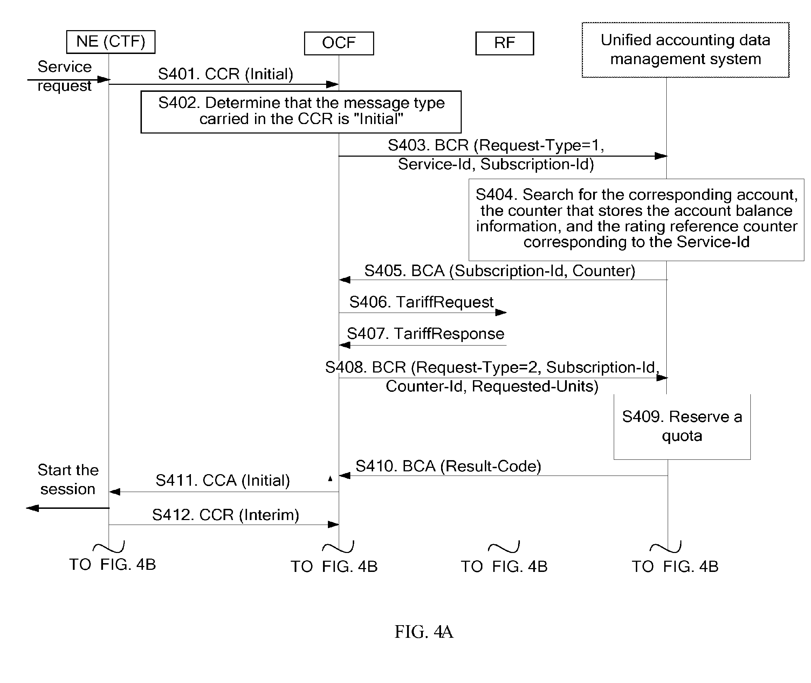

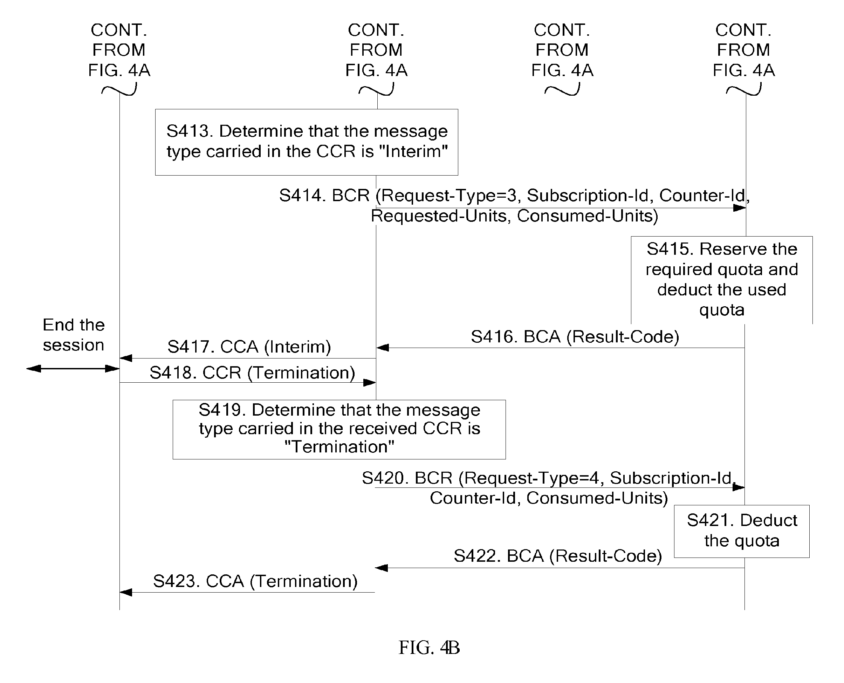

First, an instance of a session-based accounting data management method in the assumed scenario is given below. FIG. 4 is a flowchart of this instance. The flow includes the following steps:
Step S401: The network element sends a CCR to the OCF, requesting to reserve a quota. The message type carried in the CCR is "Initial".
Step S402: After receiving the CCR, the OCF module determines that the message type carried in the CCR is "Initial".
Step S403: The OCF module sends a BCR to the unified accounting data management system. The BCR carries these parameters: "Subscription-Id", "Service-Id", and "Request-Type = 1" which means reading the account information and counter information, namely, reading the input information required for rating.
Step S404: According to the Subscription-Id, the unified accounting data management system searches for the corresponding account, the counter that stores the account balance information, and the rating reference counter corresponding to the Service-Id.
Step S405: The unified accounting data management system sends a BCA to the OCF. The BCA carries the counter that stores the account balance information and the rating reference counter corresponding to the Service-Id.
Step S406: The OCF module sends a tariff request to the RF. The tariff request carries the counter that stores the account balance information and the rating reference counter corresponding to the Service-Id.
Step S407: According to the information carried in the tariff request, the RF module performs rating, and returns a tariff response to the OCF. The tariff response carries the tariff information of this service.
Step S408: The OCF module sends a BCR to the unified accounting data management system. The BCR carries a Subscription-Id, the Counter-Id identifying the counter that stores the account balance information, and the quota to be reserved. This quota is specified by the OCF module according to the tariff information of this service obtained in step S407. The quota may be the quantity of units (Requested-Units) such as a conversation quota expressed by duration, or a quota expressed in money (Monetary-Quota) such as a conversation quota expressed by a price per minute. The BCR may carry "Request-Type = 2", which indicates initial reservation.
Step S409: In the account balance corresponding to the Subscription-Id on the counter identified by the Counter-Id, the unified accounting data management system reserves the units indicated by "Requested-Units", or the money indicated by "Monetary-Quota".
Step S410: The unified accounting data management system returns a BCA to the OCF module. The BCA carries a Result-Code indicating whether the requested quota is reserved successfully. If the account balance is not enough for paying the quota requested by the OCF module, the unified accounting data management system adds all the balance of the account into the BCA returned to the OCF module so that the OCF module can perform reverse calculation and reservation again.
Step S411: The OCF module returns a Credit Control Answer (CCA) carrying the successfully reserved quota to the network element, and the service session of the user begins.
Step S412: When the successfully reserved quota is about to run out or another chargeable event occurs, the network element needs to send a CCR to the OCF module to ensure the service continuity. The message type carried in this CCR is "Interim".
Step S413: The OCF module determines that the message type carried in the CCR from the network element is "Interim".
Step S414: The OCF module sends a BCR to the unified accounting data management system. The BCR carries a Subscription-Id, the Counter-Id of the counter that stores the account balance information, units to be reserved (Requested-Units), and consumed units (Consumed-Units). The quota here may be monetary. The BCR further carries "Request-Type = 3", which indicates interim update.
Step S415: In the balance of the account corresponding to the Subscription-Id on the counter identified by the Counter-Id, the unified accounting data management system deducts the consumed units. If the consumed quota is monetary, the monetary quota is deducted directly.
Step S416: The unified accounting data management system returns a BCA to the OCF module. The BCA carries a Result-Code indicating whether the quota is reserved successfully or not. If the account balance is not enough for paying the quota indicated by the OCF module, the unified accounting data management system adds all the balance of the account into the BCA returned to the OCF module so that the OCF module can perform reverse calculation and reservation again.
Step S417: The OCF module returns a CCA carrying the granted quota to the network element.

In the service process, steps S412-S416 may be repeated.

Step S418: The service session is completed. The network element sends a CCR to the OCF module, requesting to deduct an expense for the service. The message type carried in the CCR is "Termination".

Step S419: The OCF module determines that the message type carried in the received CCR is "Termination".

Step S420: The OCF module performs the final rating, and sends a BCR to the unified accounting data management system. This BCR carries the Subscription-Id, the Counter-Id identifying the counter that stores the account balance information, and the Consumed-Units, or a monetary quota. The request type is "Request-Type = 4", indicating termination of use.

Step S421: In the balance of the account corresponding to the Subscription-Id on the counter identified by the Counter-Id, the unified accounting data management system deducts the consumed units, and updates or releases the unconsumed reserved quota.

Step S422: The unified accounting data management system returns a BCA to the OCF module. The BCA carries a Result-Code indicating whether the expense is deducted successfully.

Step S423: The OCF module sends a CCA to the network element, indicating whether the expense is deducted successfully.

The foregoing steps S401-S423 describe a session-based instance.

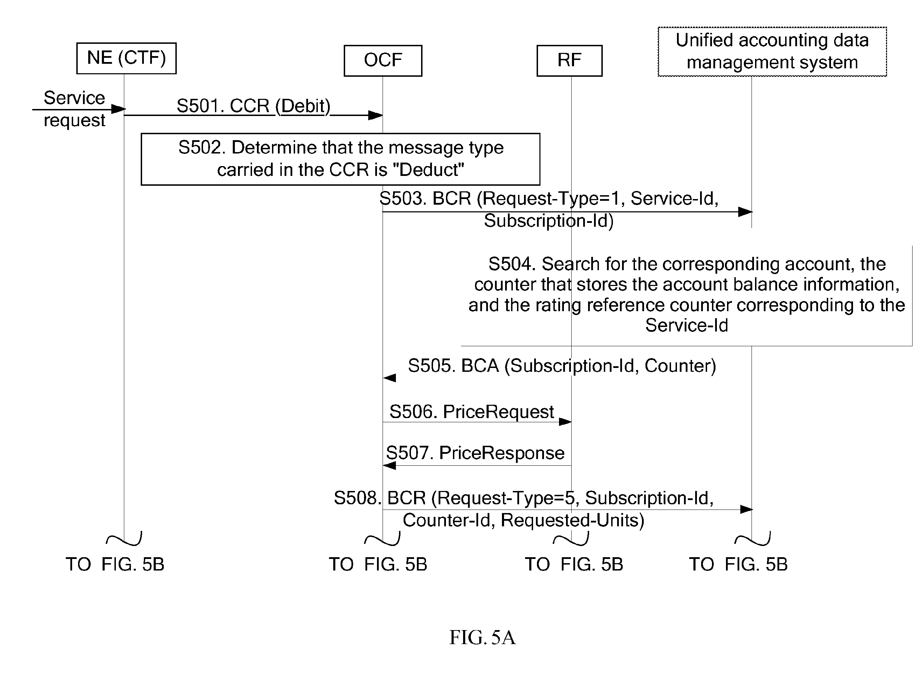

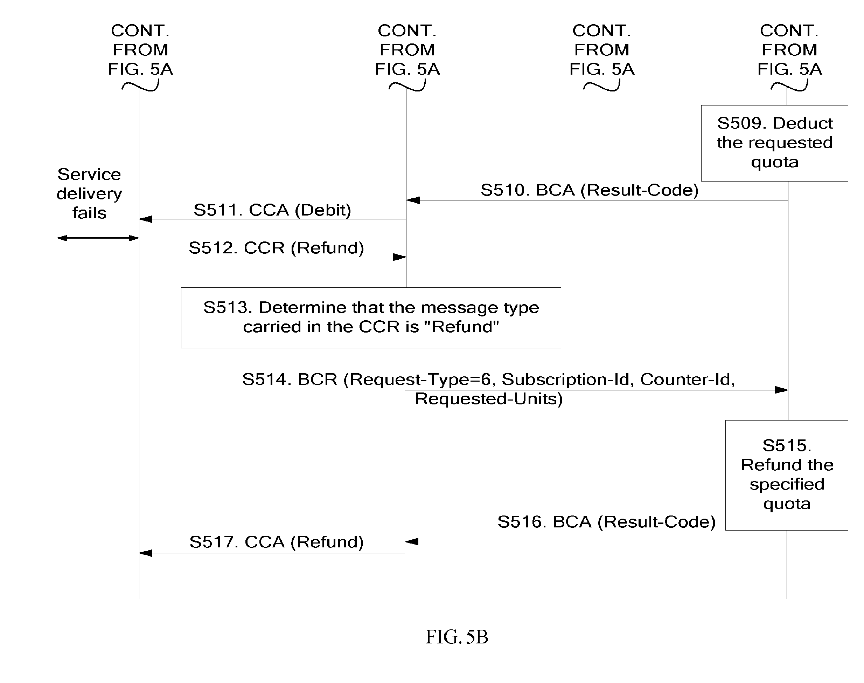

Secondly, an instance of an event-based accounting data management method in the assumed scenario is given below. FIG. 5 is a flowchart of this instance, and primarily illustrates the refunding process. The process includes the following steps:
Step S501: The network element sends a CCR to the OCF module, requesting to deduct an expense directly. The message type carried in the CCR is "Deduct". The deduction in this step is different from the deduction in step S418 of the process shown in FIG. 4. In step S418, a quota is reserved; that is, a sum in the account is frozen. After the service is consumed successfully and completed, the consumed quota is deducted from the account. In this step, an expense is deducted from the account before use of the service no matter whether the user uses the service successfully.
Step S502: The OCF module determines that the message type carried in the CCR is "Deduct".
Step S503: The OCF module sends a BCR to the unified accounting data management system. The BCR carries these parameters: "Subscription-Id", "Service-Id", and "Request-Type = 1" which means reading the account information and counter information, namely, reading the input information required for rating.
Step S504: According to the Subscription-Id, the unified accounting data management system searches for the corresponding account, the counter that stores the account balance information, and the rating reference counter corresponding to the Service-Id.
Step S505: The unified accounting data management system sends a BCA to the OCF module. The BCA carries the counter that stores the account balance information and the rating reference counter.
Step S506: The OCF module sends a price request to the RF module. The price request carries the counter that stores the account balance information and the rating reference counter. In this embodiment, the event-based tariff request is "price request" and the event-based tariff response is "price response", which are different from the tariff request and the tariff response in the session-based scenario.
Step S507: The RF module performs rating, and sends the price response generated after the rating to the OCF module. The price response carries the tariff information corresponding to this service.
Step S508: The OCF module sends a BCR to the unified accounting data management system. The BCR carries a Subscription-Id, the Counter-Id of the counter that stores the account balance information, the quota to be deducted (this quota may be Requested-Units or a monetary quota), and "Request-Type = 5" which indicates direct deduction.
Step S509: In the account balance corresponding to the Subscription-Id on the counter identified by the Counter-Id, the unified accounting data management system deducts the required quota directly.
Step S510: The unified accounting data management system returns a BCA to the OCF module. The BCA carries a Result-Code indicating whether the specified quota is deducted successfully.
Step S511: The OCF module returns a CCA carrying the granted quota to the network element.
Step S512: In the case that the service delivery fails, the network element sends a CCR to the OCF module, requesting to refund the deducted expense. The message type carried in the CCR is "Refund".
Step S513: The OCF module determines that the message type carried in the CCR is "Refund".
Step S514: The OCF module sends a BCR to the unified accounting data management system. The BCR carries a Subscription-Id, the quota to be refunded, the Counter-Id identifying the counter that stores the account balance information, and "Request-Type = 6" which indicates a refund request.
Step S515: In the account balance corresponding to the Subscription-Id on the counter identified by the Counter-Id, the unified accounting data management system refunds the specified quota.
Step S516: The unified accounting data management system sends a BCA to the OCF module, indicating whether the refund succeeds.
Step S517: The OCF module sends a CCA to the network element, indicating whether the refund succeeds.

The foregoing steps S503-S507 are optional. That is, in the scenario of deducting an expense directly, the OCF module does not necessarily request accounting data from the unified accounting data management system before requesting the tariff information from the RF module, but may request the unified accounting data management system to deduct an expense directly through step S508 according to the expense specified for the direct deduction.

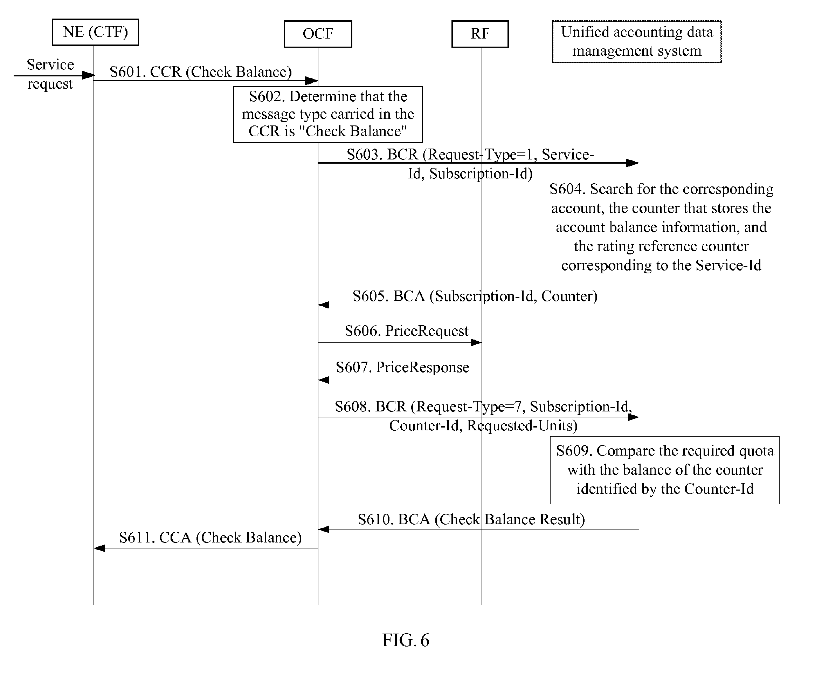

Thirdly, an instance of an event-based accounting data management method in the assumed scenario is given below. FIG. 6 is a flowchart of this instance, and primarily illustrates a process of checking whether the balance of the account is enough for the service to be used. The process includes the following steps:
Step S601: The network element sends a CCR to the OCF module. The message type carried in the CCR is "Check Balance".
Step S602: The OCF module determines that the message type carried in the CCR is "Check Balance".
Step S603: The OCF module sends a BCR to the unified accounting data management system. The BCR carries these parameters: "Subscription-Id", "Service-Id", and "Request-Type = 1" which means reading the account information and counter information, namely, reading the input information required for rating.
Step S604: According to the Subscription-Id, the unified accounting data management system searches for the corresponding account, the counter that stores the account balance information, and the rating reference counter corresponding to the Service-Id.
Step S605: The unified accounting data management system sends a BCA to the OCF module. The BCA carries the counter that stores the account balance information and the rating reference counter corresponding to the Service-Id.
Step S606: The OCF module sends a tariff request to the RF. The tariff request carries the counter that stores the account balance information and the rating reference counter corresponding to the Service-Id.
Step S607: According to the information carried in the tariff request, the RF module performs rating, and returns a tariff response to the OCF module. The tariff response carries the tariff information of this service.

In steps S603-S607, the current service is rated. According to the tariff information obtained in the rating, the unified accounting data management system judges whether the account balance is enough for the service. In practice, steps S603-S607 are optional. That is, in the scenario of checking the balance, the OCF module does not necessarily request accounting data from the unified accounting data management system before requesting the tariff information from the RF module, but may request the unified accounting data management system to check the balance directly through step S608 according to the expense specified for the balance check.

Step S608: The OCF module sends a BCR to the unified accounting data management system. The BCR carries a Subscription-Id, the Counter-Id of the counter that stores the account balance information, the quota required for the service (this quota may be Requested-Units or a monetary quota), and "Request-Type = 7" which indicates balance check.

Step S609: The unified accounting data management system compares the quota required for the service with the balance in the counter identified by the Counter-Id to determine whether the balance can support the service, namely, to determine whether the credit is enough.

Step S610: The unified accounting data management system returns a BCA to the OCF module. The BCA carries a balance check result which indicates whether the credit is enough.

Step S611: The OCF module sends a CCA to the network element. The CCA carries a balance check result which indicates whether the credit is enough.

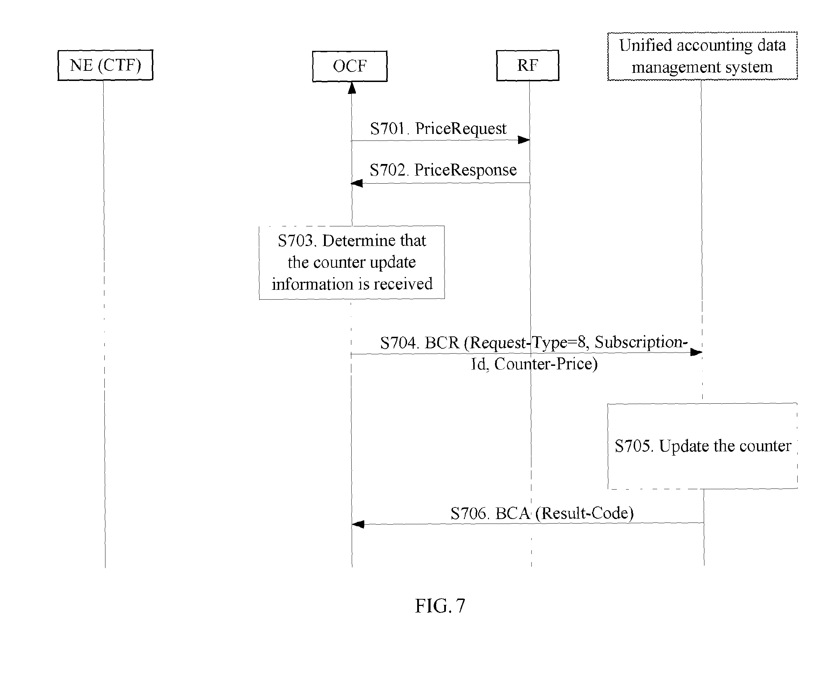

Finally, an instance of the event-based accounting data management method in the assumed scenario is given below. FIG. 7 is a flowchart of this instance, and illustrates a process of recharging an account and modifying value of the counter. In this process, the OCF still needs to obtain the counter information from the unified accounting data management system first, and then apply to the RF for rating and update the obtained counter information. The OCF module may obtain the counter information from the unified accounting data management system in the same way as what is illustrated in FIG. 4 - FIG. 6. After the OCF module applies for rating, the process includes the following steps:
Step S701: The OCF module sends a price request to the RF module. The price request carries the counter that stores the account balance information and the rating reference counter.
Step S702: The RF module performs rating, and sends the price response generated after the rating to the OCF module. The price response carries the tariff information corresponding to this service and the counter update information.
Step S703: The OCF module determines that the price response carries the counter update information.
Step S704: The OCF module sends a BCR to the unified accounting data management system. The BCR carries a Subscription-Id, the counter update information, and "Request-Type = 8" which indicates a request for updating the counter.
Step S705: The unified accounting data management system modifies the corresponding counter according to the Subscription-Id and the counter update information.
Step S706: The unified accounting data management system sends a BCA to the OCF module. The BCA carries a result indicating whether the counter is updated successfully.

FIG. 4 - FIG. 7 give instances of a method for opening accounting data capabilities with respect to different request types in the assumed scenario in an embodiment of the present invention.

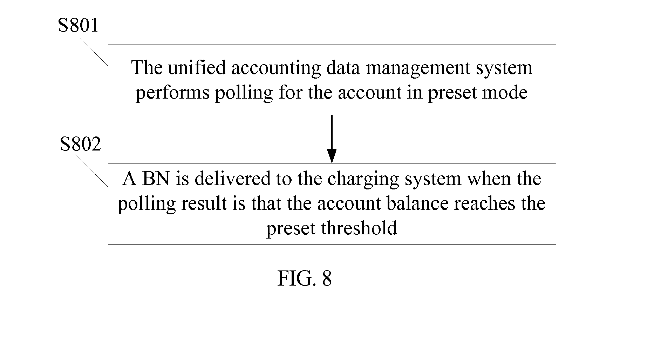

FIG. 8 is a flowchart of the operations further included in the method for opening accounting data capabilities in an embodiment of the present invention. The flow includes the following steps:
Step S801: The unified accounting data management system performs polling in preset mode.

In this step, the preset mode may refer to setting a time interval of polling, and polling is performed in each set interval. Alternatively, the preset mode may refer to setting the polling to be triggered by time, for example, triggered at the time of starting to provide the requested service for the user. Other different polling modes may also be set as required.

Step S802: A Balance Notification (BN) is delivered to the charging system when the polling result is that the account balance reaches the preset threshold.

An exemplary format of the BN given in this step is as follows:

```
      <BN> ::= < Header: XXX, REQ, PXY >
                   { Subscription-Id }
                * { Counter }
```

In the foregoing format, "Subscription-Id" is a subscription identifier, and "Counter" indicates the counter that stores the balance information and other types of counters. Table 5 describes the parameters in the foregoing BN.

**Table 5**

| Parameter | Description | Note |
|---|---|---|
| **Subscription-Id** | Subscription identifier | Mandatory |
| **Counter** | Balance counter and other types of counters | Mandatory |

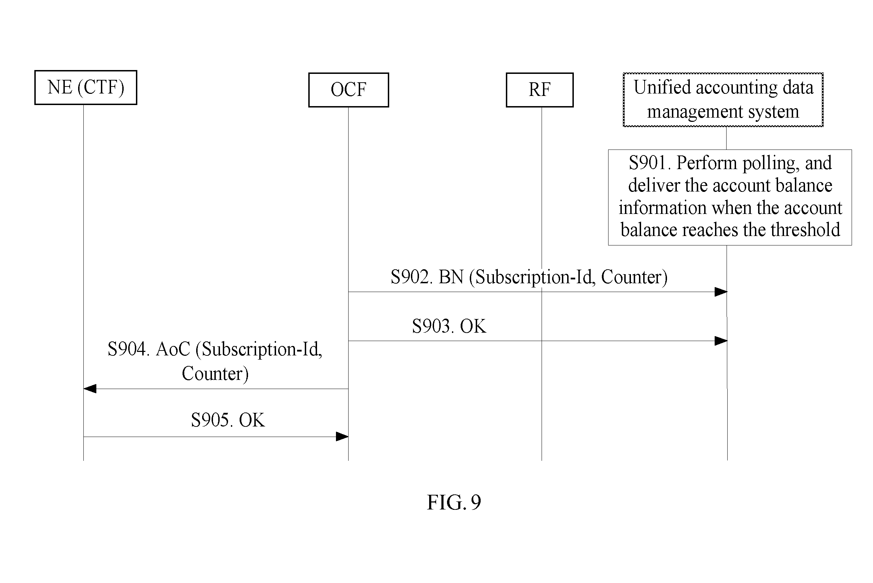

The preferred embodiment described in steps S801-S802 above is also applicable to an OCS architecture. FIG. 9 is a flowchart of applying the flow in FIG. 8 to an OCS architecture, and includes the following steps:
Step S901: The unified accounting data management system performs polling in preset mode, and triggers delivery of the account balance information when the account balance reaches the preset threshold.
Step S902: The unified accounting data management system sends a BN to the OCF module. The BN carries the Subscription-Id and the counter that stores the balance information.
Step S903: After receiving the BN, the OCF module returns an OK message to the unified accounting data management system.
Step S904: The OCF module sends an Advice of Charge (AoC) to the network element. The AoC carries the Subscription-Id and the counter that reaches the threshold and stores the account balance.

In the method for opening the accounting data capabilities described above, the prepaid system is taken as an example of the charging system. In practice, the type of the charging system is not limited. An instance of the foregoing method applied in a postpaid system scenario is described briefly below.

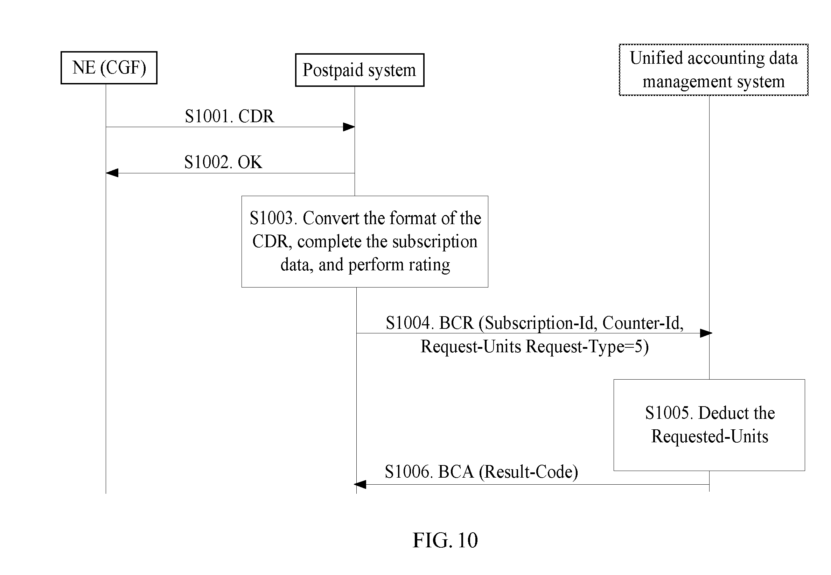

The postpaid system generates a CDR after the user uses the service, and deducts the expense from the account of the user according to the CDR. FIG. 10 is a flowchart of the method in a postpaid system scenario. The flow includes the following steps:
Step S1001: The CGF module or a network element with a CGF sends a CDR to the postpaid system. The transmission of the CDR is well known to those skilled in the art, and is not described further.
Step S1002: The postpaid system returns an OK message after receiving the CDR.
Step S1003: The postpaid system converts the format of the CDR, completes the subscription data, and performs rating.
Step S1004: The postpaid system sends a BCR to the unified accounting data management system. The BCR carries a Subscription-Id, the Counter-Id of the counter that stores the account balance information, the Requested-Units to be deducted, and "Request-Type = 5" which indicates expense deduction. The deduction may be expressed in money directly.
Step S1005: In the account balance corresponding to the Subscription-Id on the counter identified by the Counter-Id, the unified accounting data management system deducts the specified Requested-Units or money.
Step S1006: The unified accounting data management system sends a BCA to the postpaid system. The BCA carries a Result-Code indicating whether the specified Requested-Units or money is deducted successfully.

Finally, the system for opening accounting data capabilities in an embodiment of the present invention is described below. The system includes:
an accounting data management module 1, adapted to: store accounting data; invoke an interface module 2 to receive a BCR sent by a charging system and carrying a request type, and perform an accounting data management operation corresponding to the request type for the accounting data; and invoke the interface module 2 to send a BCA carrying an accounting data processing result to the charging system; and
the interface module 2, available to be invoked by the accounting data management module 1.

The system for opening the accounting data capabilities in the embodiment of the present invention is independent of the charging system, and stores the accounting data. This system may perform an accounting data management operation for the account data and interacts with the charging system through a BCR and a BCA. Therefore, the accounting data is sharable between different charging platforms, and a specific implementation mode for interactions in the accounting data management is provided.

In the foregoing system for opening accounting data capabilities, the accounting data management module 1 may include:
a storing module 10, adapted to store accounting data; and
a resolution executing module 20, adapted to: invoke the interface module 2 to receive a BCR sent by the charging system and carrying a request type, resolve the request type, and perform an accounting data management operation corresponding to the request type; and invoke the interface module 2 to send a BCA carrying an accounting data processing result to the charging system.

In practice, the foregoing resolution executing module 20 may include a resolution transmitting and receiving module 200 and the following modules which implement different accounting data management functions: an initial reserving module 210, and/or a use terminating module 220, and/or an interim updating module 230, and/or an accounting data reading module 240, and/or a deducting module 250, and/or a refunding module 260, and/or a balance checking module 270, and/or a counter modifying module 280. The functions of the foregoing modules and the connections with other modules in the system are described below.

The resolution transmitting and receiving module 200 is adapted to: invoke the interface module 2 to receive a BCR sent by the charging system and carrying a request type, and resolve the request type; and invoke the interface module 2 to send a BCA carrying an accounting data processing result to the charging system.

The initial reserving module 210 is adapted to: reserve the specified quota in the accounting data stored in the storing module 10 according to the type of the initial reservation request resolved by the resolution transmitting and receiving module 200, and send a result of reserving the quota to the resolution transmitting and receiving module 200.

The interim updating module 230 is adapted to: reserve a new quota in the accounting data stored in the storing module 10 according to the type of the interim update request resolved by the resolution transmitting and receiving module 200, deduct the consumed quota in the reserved quota, and send a result of reserving the new quota and deducting the consumed quota to the resolution transmitting and receiving module 200.

The use terminating module 220 is adapted to: deduct the consumed quota in the reserved quota in the accounting data stored in the storing module 10 according to the type of the use termination request resolved by the resolution transmitting and receiving module 200, release the unconsumed quota, and send a result of deducting the consumed quota to the resolution transmitting and receiving module 200.

The accounting data reading module 240 is adapted to: read the requested accounting data in the accounting data stored in the storing module 10 according to the type of the accounting data reading request resolved by the resolution transmitting and receiving module 200, and send the read accounting data to the resolution transmitting and receiving module 200.

The deducting module 250 is adapted to: deduct the specified quota in the accounting data stored in the storing module 10 according to the type of the direct deduction request resolved by the resolution transmitting and receiving module 200, and send a result of deduction to the resolution transmitting and receiving module 200.

The refunding module 260 is adapted to: refund the specified quota in the accounting data stored in the storing module 10 according to the type of the refund request resolved by the resolution transmitting and receiving module 200, and send a result of refund to the resolution transmitting and receiving module 200.

The balance checking module 270 is adapted to: compare the specified quota with the account balance according to the type of the balance check request resolved by the resolution transmitting and receiving module 200, determine whether the account balance is enough for meeting the specified quota, and send a result of balance check to the resolution transmitting and receiving module 200.

The counter modifying module 280 is adapted to: modify the counter that carries the stored accounting data in the storing module 10 according to the type of the counter modification request resolved by the resolution transmitting and receiving module 200, and send a result of modifying the counter to the resolution transmitting and receiving module 200.

In the session-based accounting data management application, the resolution executing module 20 in the system in this embodiment may include not only a resolution transmitting and receiving module 200, but also an initial reserving module 210 and a use terminating module 220, and even an interim updating module 230.

In the event-based accounting data management application, the resolution executing module 20 in the system in this embodiment may include not only a resolution transmitting and receiving module 200, but also an accounting data reading module 240, and/or a deducting module 250, and/or a deducting module 260, and/or a balance checking module 270, and/or a counter modifying module 280.

In the system in this embodiment, the accounting data management module 1 may include:
a polling module 30, adapted to perform polling in preset mode; and
a balance notification delivering module 40, adapted to invoke the interface module 2 to deliver a BN to the charging system when the polling result of the polling module 30 is that the account balance reaches the preset threshold.

The system for opening accounting data capabilities in this embodiment further includes a polling module 30 and a balance notification delivering module 40 so that the system can check the account and deliver a BN to the charging system actively.

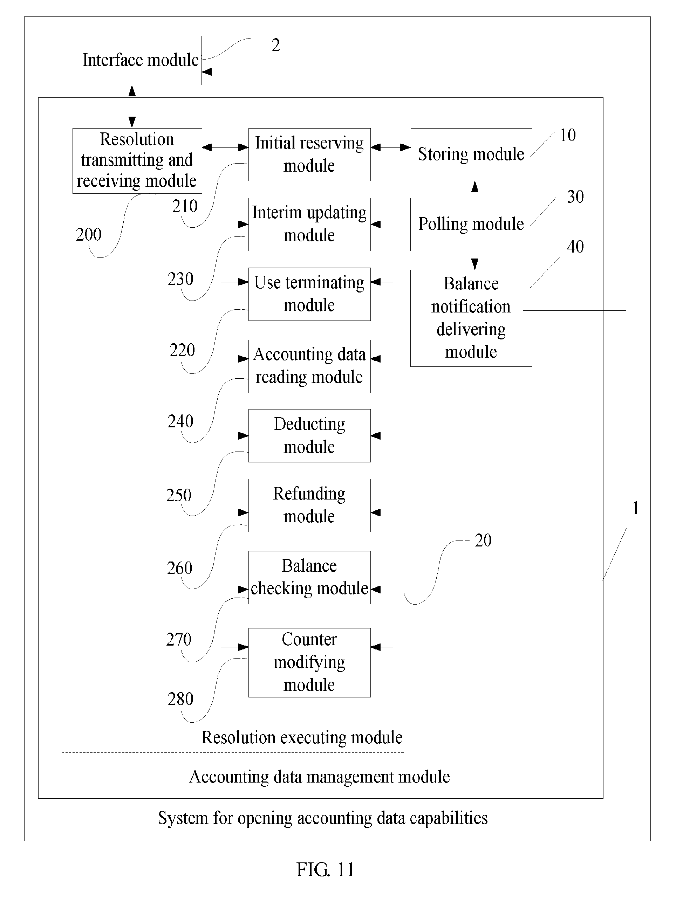

FIG. 11 shows a structure of a system for opening accounting data capabilities in an embodiment of the present invention. In this embodiment, the resolution executing module 20 in the system includes all modules in the event-based and session-based accounting management applications, and includes a polling module 30 and a balance notification delivering module 40.

An accounting data management apparatus is provided in an embodiment of the present invention. The apparatus includes: a storing module 10, adapted to store accounting data; and a resolution executing module 20, adapted to: invoke an interface module 2 to receive a BCR sent by a charging system and carrying a request type, and resolve the request type; and perform the accounting data management operation corresponding to the request type; and invoke the interface module 2 to send a BCA carrying the accounting data processing result to the charging system.

After reading the foregoing embodiments, those skilled in the art are clearly aware that the embodiments of the present invention may be implemented through hardware, or through software in addition to a necessary universal hardware platform. In most circumstances, it is better to implement the present invention through software in addition to a necessary universal hardware platform. Therefore, the essence of the technical solution under the present invention or the contributions to the prior art may be embodied as a software product. The software product is stored in a medium, and includes several instructions that enable a computer device (such as a personal computer, a server, or a network device) to perform the methods provided in the embodiments of the present invention.

Although the invention has been described through several preferred embodiments, the invention is not limited to such embodiments. It is apparent that those skilled in the art can make modifications and variations to the invention without departing from the spirit and scope of the invention. The invention is intended to cover the modifications and variations provided that they fall in the scope of protection defined by the following claims or their equivalents.

## Claims

1. A method for opening accounting data capabilities, comprising:
by a unified accounting data management system, receiving a Balance Control Request (BCR) from a charging system, wherein the BCR carries a request type;
performing an accounting data management operation corresponding to the request type; and
returning a Balance Control Answer (BCA) to the charging system, wherein the BCA carries a result of the accounting data management operation.

2. The method for opening accounting data capabilities according to claim 1, wherein the request type comprises: intial reservation, and/or intermediate update, and/or terminating use, and/or reading accounting data, and/or deducting an expense, and/or refunding, and/or checking the balance, and/or modifying counters.

3. The method for opening accounting data capabilities according to claim 2, wherein, when the request type carried in the BCR and received by the unified accounting data management system is the intial reservation, the unified accounting data management system reserves a aspecified quote, and sends the BCA carrying the reserved quote to the charging system;
when the request type carried in the BCR and received by the unified accounting data management system is the terminating use, the unified accounting data management system deducts a quota which is consumed from the previous reservation, and releases an uncomsumed quota, and the unified accounting data management system sends the BCA carrying a result of deduction to the charging system.

4. The method for opening accounting data capabilities according to claim 3, wherein, after the unified accounting data management system sends the BCA carrying a reserved quote, and before the unified accounting data management system receives the BCR which carries the request type carried of the terminating use, the method further comprises:
when the request type carried in the BCR and received by the unified accounting data management system is the intermediate update,
reserving, by the unified accounting data management system, a new quota in the accounting data and deducting a consumed quota in the reserved quota; and
sending, by the unified accounting data management system, the BCA carrying a read accounting data to the charging system.

5. The method for opening accounting data capabilities according to claim 2, wherein, when the request type carried in the BCR and received by the unified accounting data management system is the reading accounting data, the unified accounting data management system reads accounting data, sends the BCA carrying the read accounting data to the charging system.

6. The method for opening accounting data capabilities according to claim 2, when the request type carried in the BCR and received by the unified accounting data management system is the deducting an expense, the unified accounting data management system deducts the specified quota in the accounting data, and sends the BCA carrying a result of deduction to the charging system.

7. The method for opening accounting data capabilities according to claim 2, when the request type carried in the BCR and received by the unified accounting data management system is the refunding, the unified accounting data management system refunds a specified quota in the accounting data, and sends the BCA carrying a result of refund to the charging system.

8. The method for opening accounting data capabilities according to claim 2, when the request type carried in the BCR and received by the unified accounting data management system is the checking the balance and the BCR carries a specified quota, the unified accounting data management system compares the specified quota with the account balance, determine whether the account balance is enough for meeting the specified quota, and the unified accounting data management system sends the BCA carrying a result of balance check to the charging system.

9. The method for opening accounting data capabilities according to claim 2, when the request type carried in the BCR and received by the unified accounting data management system is the modifying counters, the unified accounting data management system modifies the counter, and sends the BCA carrying a result of modifying the counter to the charging system.

10. The method for opening accounting data capabilities accordng to anyone of claims 1 to 8, wherein the parameters carried in the BCR further comprise: a subscription-ID and/or a Service-ID, and/or a Counter-ID, and/or a Counter-Price, and/or Consumed-Units, and/or a Requested-Units, and/or a Monetary-Quota; and
the parameters carried in the BCA further comprise: a Result-Code, and/or a Service-Accounting, and/or a Counter-ID.

11. The method for opening accounting data capabilities accordng to anyone of claims 1 to 8, wherein, before the process of receiving, by the unified accounting data management system, the BCR from the charging system, the method further comprises: receiving, by the charging system, a credit control request (CCR) sent by a network element which has a charging trigger function, wherein the CCR carries a message type; and
after the process of returning, by the unified accounting data management system, the BCA to the charging system, the method further comprises: sending, by the charging system, a credit control answer (CCA) sent by a network element which has a charging trigger function,
wherein the CCR carries the result of the accounting data management operation.

12. The method for opening accounting data capabilities according to claim 1, further comprising:
performing, by the unified accounting data management system, polling for the account in preset mode; and
delivering, by the unified accounting data management system, a Balance Notification (BN) to the charging system, when the polling result is that the account balance reaches the preset threshold.

13. A system for opening accounting data capabilities, comprising:
an accounting data management module, adapted to: store accounting data; invoke an interface module to receive a Balance Control Request (BCR) sent by a charging system and carrying a request type, and perform an accounting data management operation corresponding to the request type for the accounting data; and invoke the interface module to send a Balance Control Answer (BCA) carrying an accounting data processing result to the charging system; and
an interface module, available to be invoked by the accounting data management module.

14. The system for opening accounting data capabilities according to claim 13, wherein the accounting data management module comprises:
a storing module, adapted to store the accounting data; and
a resolution executing module, adapted to invoke the interface module to receive the BCR sent by the charging system and carrying the request type, resolve the request type, and perform the accounting data management operation corresponding to the request type; and invoke the interface module to send the BCA carrying the accounting data processing result to the charging system.

15. The system for opening accounting data capabilities according to claim 14, wherein the resolution executing module comprises:
a resolution transmitting and receiving module, adapted to invoke the interface module to receive the BCR sent by the charging system and carrying the request type, and resolve the request type; and invoke the interface module to send the BCA carrying the accounting data processing result to the charging system;
an initial reserving module, adapted to reserve the specified quota in the accounting data stored in the storing module according to the type of the initial reservation request resolved by the resolution transmitting and receiving module, and send a result of reserving the quota to the resolution transmitting and receiving module; and
a use terminating module, adapted to deduce the consumed quota in the reserved quota in the accounting data stored in the storing module according to the type of the use termination request resolved by the resolution transmitting and receiving module, release the unconsumed quota, and send a result of deducting the consumed quota to the resolution transmitting and receiving module.

16. The system for opening accounting data capabilities according to claim 15, wherein the resolution executing module further comprises:
an interim updating module, adapted to reserve a new quota in the accounting data stored in the storing module according to the type of the interim update request resolved by the resolution transmitting and receiving module, deduct the consumed quota in the reserved quota, and send a result of reserving the new quota and deducting the consumed quota to the resolution transmitting and receiving module.

17. The system for opening accounting data capabilities according to claim 14, wherein the resolution executing module comprises:
a resolution transmitting and receiving module, adapted to invoke the interface module to receive the BCR sent by the charging system and carrying a request type, and resolve the request type; and invoke the interface module to send the BCA carrying an accounting data processing result to the charging system obtained from the initial reserving module and the use terminating module; and
an accounting data reading module, adapted to read a requested accounting data in the accounting data stored in the storing module according to the type of the accounting data reading request resolved by the resolution transmitting and receiving module, and send the read accounting data to the resolution transmitting and receiving module.

18. The system for opening accounting data capabilities according to claim 14, wherein the resolution executing module comprises:
a resolution transmitting and receiving module, adapted to invoke the interface module to receive the BCR sent by the charging system and carrying the request type, and resolve the request type; and invoke the interface module to send the BCA carrying an accounting data processing result to the charging system obtained from the initial reserving module and the use terminating module; and
a deducting module, adapted to deduct a specified quota in the accounting data stored in the storing module according to the type of the direct deduction request resolved by the resolution transmitting and receiving module, and send a result of deduction to the resolution transmitting and receiving module.

19. The system for opening accounting data capabilities according to claim 14, wherein the resolution executing module comprises:
a resolution transmitting and receiving module, adapted to invoke the interface module to receive the BCR sent by the charging system and carrying the request type, and resolve the request type; and invoke the interface module to send the BCA carrying an accounting data processing result to the charging system obtained from the initial reserving module and the use terminating module; and
a refunding module, adapted to refund a specified quota in the accounting data stored in the storing module according to the type of the refund request resolved by the resolution transmitting and receiving module, and send a result of refund to the resolution transmitting and receiving module.

20. The system for opening accounting data capabilities according to claim 14, wherein the resolution executing module comprises:
a resolution transmitting and receiving module, adapted to invoke the interface module to receive the BCR sent by the charging system and carrying the request type, and resolve the request type; and invoke the interface module to send the BCA carrying an accounting data processing result to the charging system obtained from the initial reserving module and the use terminating module; and
a balance checking module, adapted to compare a specified quota with the account balance according to the type of the balance check request resolved by the resolution transmitting and receiving module, determine whether the account balance is enough for meeting the specified quota, and send a result of balance check to the resolution transmitting and receiving module.

21. The system for opening accounting data capabilities according to claim 14, wherein the resolution executing module comprises:
a resolution transmitting and receiving module, adapted to invoke the interface module to receive the BCR sent by the charging system and carrying the request type, and resolve the request type; and invoke the interface module to send the BCA carrying an accounting data processing result to the charging system obtained from the initial reserving module and the use terminating module; and
a counter modifying module, adapted to modify the counter that carries a stored accounting data in the storing module according to the type of the counter modification request resolved by the resolution transmitting and receiving module, and send a result of modifying the counter to the resolution transmitting and receiving module.

22. The system for opening accounting data capabilities according to claim 14, wherein the accounting data management module further comprises:
a polling module, adapted to perform polling in preset mode; and
a balance notification delivering module, adapted to invoke the interface module to deliver a Balance Notification (BN) to the charging system when the polling result of the polling module is that the account balance reaches the preset threshold.

23. An accounting data management apparatus, comprising:
a storing module, adapted to store accounting data; and
a resolution executing module, adapted to invoke an interface module to receive a Balance Control Request (BCR) sent by a charging system and carrying a request type, resolve the request type, and perform an accounting data management operation corresponding to the request type; and invoke the interface module to send a Balance Control Answer (BCA) carrying an accounting data processing result to the charging system.
